# EUROPEAN PATENT APPLICATION

(11) **EP 2 434 083 A1**
(43) Date of publication of application: **28.03.2012**
(21) Application number: 10181107.3
(22) Date of filing: 28.09.2010
(51) Int. Cl.: E06B 3/98, F16B 7/04

(54) **Frame, door, window systems produced with non-destructively detachable rigid corner connection parts**

(71) Applicant: Cuhadaroglu Metal Sanayi Ve Pazarlama A.S., 34900 Istanbul (TR)
(72) Inventor: Yilmaz, Metin, 34900 Istanbul (TR); Gokdemir, Huseyin, 34900 Istanbul (TR)
(74) Representative: Dericioglu, Ekin

(57) **Abstract**

The present invention relates to comer connection parts which enable to close the gap between profiles (1) by pulling the both profiles (1) towards each other by means of the connecting lock (3) during connection which is in rigid, mechanical and watertight way, non-destructively detachable when needed, and door or window system which is produced using these members.

## Description

### Field of the Invention

The present invention relates to corner connection parts which enable to close the gap between profiles by pulling the both profiles towards each other during connection of two or more profiles with each other in rigid, mechanical and watertight way - non-destructively detachable when needed - at 90 degrees or desired angles and door or window system which is produced using these members.

### Background of the Invention

In the state of the art, the corner connection member is placed to the spaces inside both profiles by cutting the profiles of the door or window systems with 45 degrees and then local force is applied on the profiles such that the corner connection member will correspond to the spaces inside thereof using hydraulic presses thus the space between is closed completely with the profiles moving towards each other and corner connection is done by deforming the profiles finally. Materials such as epoxy, silicone are used in connection edges for the purpose of water impermeability in productions made with this method.

Disadvantage of this application is that both profiles are deformed destructively in order that the connecting process is carried out. Therefore, it is not possible to detach the corner connection in a reusable way. Another disadvantage of this application is that it requires hydraulic or pneumatic press machines.

In another state of the art, the corner connection member is placed to the spaces inside both profiles by cutting the profiles of the door or window systems with 45 degrees and then the profiles are screwed to the corner connection member from the holes drilled on both profiles.

The fact that the space between can't be closed completely since it couldn't be ensured to pull both profiles towards each other during connection process, occurrence of loosening in the screws placed on the corner connection of moving frames (wing, door, etc.) particularly and extensions on the corners in the course of time, and screwing metric threading labors are among the disadvantages of this application.

In a further state of the art, the corner connection member is placed to the spaces inside both profiles by cutting the profiles of the door or window systems with 45 degrees and then a shrink-fit connection is made by means of the tabs on the corner connection member.

The fact that the space between can't be closed completely since it couldn't be ensured to pull both profiles towards each other during connection process, the corner connection can't be detached in a reusable way, production spaces lead to extensions on the corners in the course of time in large-sized corner connection parts are among the disadvantages of this application.

### Objective of the Invention

The objective is that the profiles cut at 45 degrees or desired angles are made into a frame such that they will have corner connections which don't require a connection machine that is rigid, mechanical, watertight way, space-free and non-destructively detachable when needed and to produce door, window or curtain wall using these frames.

### Figures Illustrating the Invention

The present invention should be evaluated in conjunction with the figures which are described below, in order that it's configuration and advantages with the additional parts are understood best.

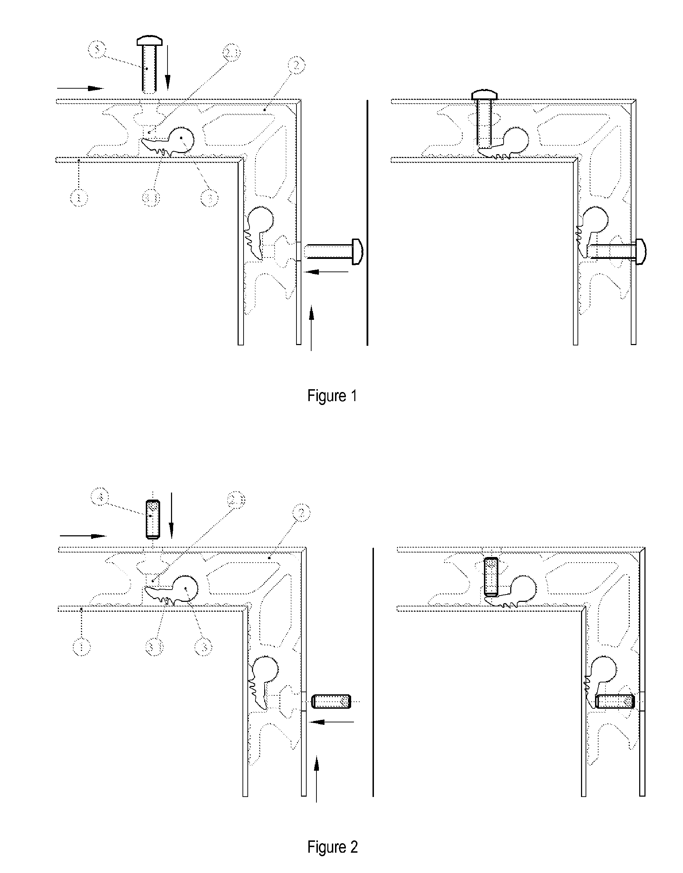

Figure 1, before and after the corner connection process carried out using screw;
Figure 2, before and after the corner connection process carried out using set screw;

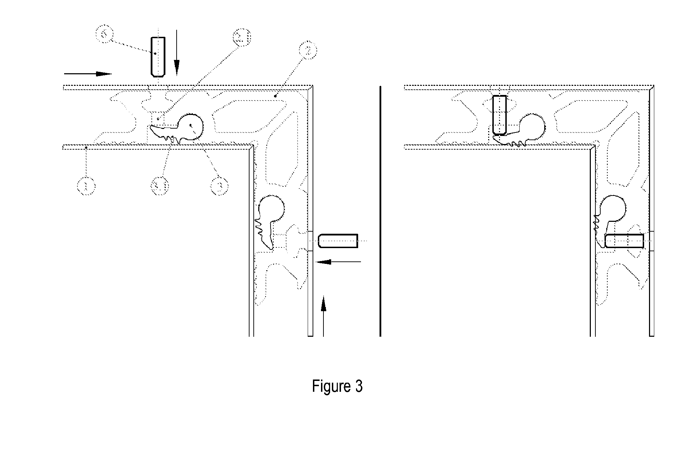

Figure 3, before and after the corner connection process carried out using pin.

### Part numbers

1) Profile
2) Corner connection member
   2.1) Screw socket
3) Connecting lock
   3.1.Connecting lock jaws
4) Set screw
5) Connecting screw
6) Pin
7) Hydraulic Press

### Detailed Description of the Invention

In this detailed description, preferred embodiments of the inventive fenestration system are described only for better understanding of the subject and in such a manner that it won't produce any limiting effect.

Profiles of (such as frame, transom, vent, mullion) the inventive thermally-insulated aluminium door, window or curtain wall system are produced in extrusion presses such that they have slots suitable for accessories and corner connection parts to be used. At first water insulating materials are injected into the profiles cut at the desired angles, usually 45 degrees, and then the corner connection member (2) is placed together with the connecting lock (3). The connecting screw (5) is placed to the threaded screw socket (2.1) on the corner connection member (2), by being passed through the hole on the profiles (1) and then the screw (5) is advanced by turning. By means of this advance, the connecting lock (3) is enabled to pull the profiles (1) towards the corner and the space between is closed completely. When the progress motion of the connecting screw (5) is continued the connecting lock jaws (3.1) can be detached in rigid, mechanical, watertight, space-free way and non-destructively detachable when needed by gripping the profile and the connecting is completed without using a connection machine.

Another mode of administration using the same method and the connection member (2) of the inventive profiles is that the process of pulling the profiles towards each other by means of the connecting lock (3) of the corner connection member (2) and connecting them without using a connection machine that is rigid, mechanical, watertight, space-free and non-destructively detachable when needed can be carried out via a headless screw called set screw (4) instead of screw.

A further mode of administration using the same method and the connection member (2) of the inventive profiles is that the process of pulling the profiles towards each other by means of the connecting lock (3) of the corner connection member (2) and connecting them without using a connection machine that is rigid, mechanical, water repellent, space-free and non-destructively detachable when needed can be carried out as shrink-fit by means of pin (6) instead of screw or set screw (4).

Another method of administration using the same connection member (2) of the inventive profiles is that, as is in the conventional system, the profiles are subjected to plastic deformation towards the spaces inside the corner connection member and thus a non-destructive, undetachable connection is made.

## Claims

1. The invention is **characterized by** the frame systems and door, window or curtain wall systems produced using these frames which enable two or more profiles cut at 45 degrees or desired angles to be connected in rigid and mechanical way; have sufficient resistance to carry the weight of the filling material such as glass or the other forces acting on itself; continue the waterproofing between the outer environment and the inner environment; enable to close the gap between profiles by pulling the both profiles towards each other during connection; are non-destructively detachable when required and whereby the corner connection process is carried out with fixing parts such as screw, set screw or pin, without using any machinery.

## Amended claims

### Amended claims in accordance with Rule 137(2) EPC.

**1.** The invention is connection process of two or more window, door or curtain wall profiles which continues waterproofing between two environments, have sufficient resistance to carry the weight of the filling material such as glass or the other forces acting on itself, cut at 45 degrees or desired angles, **characterized by** moving the corner connection member (2) internal spaces of which are not subjected to any threading operation, and the connecting lock (3) which is placed into the corner connection member (2) rotationally by means of a connection member such as pin etc. (6); the connecting lock jaws (3.1) holding on to the profiles with this movement; and comprising corner connection member (2) and connecting lock (3) which enable to connect profiles (1) in a rigid and mechanical way without gap by pulling the profiles (1) towards each other without using any machinery.
